# EUROPEAN PATENT SPECIFICATION

(11) **EP 0 720 247 B1**
(45) Date of publication and mention of the grant of the patent: **27.05.1998**
(21) Application number: 95119801.9
(22) Date of filing: 15.12.1995
(51) Int. Cl.: H01M 4/52, C01G 53/00, H01M 4/50

(54) **Manufacturing processes of positive active materials for lithium secondary batteries and lithium secondary batteries comprising the same**
Verfahren zur Herstellung positiven aktiven Materials für Lithium-Sekundärbatterien und diese enthaltende sekundäre Zellen
Procédé de fabrication des matières positives actives pour batteries secondaires au lithium et batteries secondaires au lithium les contenant

(30) Priority: 16.12.1994 JP 313140/94; 02.03.1995 JP 42900/95; 16.12.1994 JP 313141/94
(43) Date of publication of application: 03.07.1996
(73) Proprietor: MATSUSHITA ELECTRIC INDUSTRIAL CO., LTD., Kadoma-shi, Osaka-fu, 571 (JP)
(72) Inventor: Yamaura, Junichi, Kobe-shi, Hyogo, 651-15 (JP); Okamura, Kazuhiro, Kadoma-shi, Osaka, 571 (JP); Nitta, Yoshiaki, Hirakata-shi, Osaka, 573 (JP)
(74) Representative: Kügele, Bernhard

(56) References cited:
- EP-A- 0 468 942
- EP-A- 0 556 555
- DATABASE WPI Section Ch, Week 8006 Derwent Publications Ltd., London, GB; Class L03, AN 80-10245C XP002001644 & JP-A-54 163 324 (YARDNEY ELEC CORP) , 25 December 1979

## Description

### BACKGROUND OF INVENTION

The present invention relates to a manufacturing process of lithium secondary batteries, especially of positive active materials to be used for the batteries.

Along with the rapid progress of portable or cordless electronic apparatus, the demands for a compact and light weight secondary batteries having high energy density are growing up. In this respect, the lithium secondary batteries are attracting a great expectation because of their high voltage and high energy density.

Recently, lithium secondary batteries, so-called "lithium-ion batteries", have been developed employing LiCoO2 as the positive electrodes and carbon materials as the negative electrodes. The high voltages of these batteries owe to the operating positive electrode potential of LiCoO2 which is as high as 4V versus Li electrode potential.

Besides, the batteries using carbon materials as negative electrodes have more charge-discharge cycle life characteristics and safety than the batteries using metallic Li negative electrodes, because the carbon material negative electrodes utilize the intercalation reaction which does not cause dendritic and /or mossy deposition of Li.

In view of the supply and cost of Co, efforts have been made to develop lithium containing oxide to replace LiCoO2. LiNiO2 has been expected. As LiNiO2, LiCoO2 and these kind of lithium containing oxides provide high cell voltages and belong to the same stratified compound having hexagonal crystal structure with which the intercalation reaction is available, these are the expected candidates for positive active material.

From this point of view, there have been proposals such as Lix NiO2 (USP 4302518), Liy Ni2-y O2 (Japanese patent application open- laying No. Hei2- 40861) both are related with LiNiO2 ; and LiyNix Co1-xO2 (Japanese patent application open- laying No.Sho63- 299056), LiyNi1-xM xO2 (where, M is one of Ti, V, Mn or Fe), which are lithium containing oxides wherein a part of Ni of LiNiO2 is replaced with other metal. Other lithium containing oxides are also proposed, which include Ax My Nz O2 (where, A is alkaline metal, M transition metal, N one of A1, In or Sn) (Japanese patent application open- laying No. Sho62- 90863), Li xM yNz O2 (where, M is at least one selected from Fe, Co, Ni; N at least one selected from Ti, V, Cr, Mn)(Japanese patent application open- laying No. Hei4- 267053). Utilizing these materials, the activities have been made to develop high energy density lithium secondary batteries of 4V class discharge voltage.

Among these lithium containing oxides, LiNiO2 has also a 4V operating positive electrode potential against lithium electrode, and realizes a secondary battery of high energy density. However, the capacities of the batteries using LiNiO2 positive electrodes deteriorate as the charge- discharge cycles proceed, down to 65% of the initial capacities after the 50th cycle. The unsatisfactory charge- discharge cycle characteristic is a problem.

As described above, in order to solve the problem, lithium containing oxides in which a part of Ni is replaced with other metal have been proposed. The materials in which a part of Ni in LiNiO2 was replaced with other metal show relatively improved charge- discharge cycle reversibility, but the discharge capacity and voltage tend to go down. Thus, the high voltage, the high energy density, being the principally desired advantages diminish. Among these proposals, the one in which a part of Ni is replaced with Co or Mn shows relatively favorable results in each characteristics of charge- discharge cycle reversibility, discharge capacity and voltage, as compared with conventional other lithium containing oxides.

Active materials in which a part of Ni in LiNiO2 was replaced with Co are generally prepared by adding Co compounds like cobalt hydroxide, Li compounds like lithium hydroxide and Ni compounds like nickel hydroxide, and then burning them (hereinafter referred to as mixing and burning method). The burning temperature for obtaining compounds having monophase crystal structure with replaced Co is to be within a range 600 °C - 800 °C. Growth of the monophase depends on burning temperature; the reaction does not complete under 600 °C. As the Ni contents increase, the single phase is created but the crystalline property deteriorates in a region exceeding 800 °C. It seems that at a temperature higher than 800 °C, Ni and Co atoms locate in the sites in crystal where Li atoms should be, causing disorder structure.

Active materials in which a part of Ni in LiNiO2 was replaced with Mn are also generally prepared by adding Mn compounds like manganese dioxide, manganese nitrate, Li compounds like lithium hydroxide and Ni compounds like nickel hydroxide, and then burning them by the mixing and burning method. In this mixing and burning method, however, a burning temperature higher than 800 °C is needed to replace a part of Ni completely with Mn; at a temperature lower than 800 °C the substitution reaction is not completed in so far as estimated through X- ray diffraction pattern.

However, when it is burned at a temperature higher than 800 °C, Ni and Mn atoms locate in the sites in crystal where Li atoms should be, causing disorder, deteriorated cyclability and discharge capacity. Therefore, it is not recommendable to burn a lithium containing oxide based on LiNiO2 at a high temperature.

Even if burned at any temperature range, the discharge capacity tends to follow a decreasing trend as the charge- discharge cycles proceed, in so far as the conventional manufacturing process (mixing and burning method) is used.

For example, with reference to the active materials comprising Li-Ni-Mn-oxide, it is known from EP-A-0.556.555 a manufacturing process of positive active materials for lithium secondary batteries represented by the formula LiNi₁₋ₓMnₓO₂ where the value x is 0,05 ≤ x ≤ 0,45; wherein a lithium salt, a nickel salt and manganese nitrate are mixed and then the mixture is thermally treated at a temperature within a range of 600°C to 900°C.

The present invention aims to solve the problems described above and offers a manufacturing process of lithium containing composite oxides represented in a formula LiNix Co(1- x) O2 or a formula LiNix Mn(1-x) O2 wherein the crystal structure is single phased and highly completed without crystal defect, and completely replacing a part of Ni with Co or Mn.

### SUMMARY OF THE INVENTION

It is possible to solve the above mentioned problems by a manufacturing process of positive active materials for lithium secondary batteries according to the present invention. Said positive active materials also specify the value x in a formula LiNix Co(1- x) O2 to be 0.95 ≧ x ≧ 0.50. At the begining of the manufacturing process, composite hydroxides comprizing Ni and Co are made through coprecipitation of cobalt and nickel hydroxides by adding caustic alkali aqueous solution to mixed aqueous solution containing cobalt and nickel salts, and then the composite hydroxides are mixed with lithium compounds like lithium hydroxide, and burned at a temperature range not less than 600 °C, not more than 800 °C to make positive active materials. On the other hand, the manufacturing process of a lithium containing oxide, nickel and mangnese represented by a formula LiNixMn(1-x)O2, where the value x is specified to be 0.95 ≧ x ≧ 0.70 is shown as follows. At the begining, the composite hydroxides comprising manganese and nickel are provided through coprecipitation of manganese and nickel hydroxides by adding caustic alkali aqueous solution to mixed aqueous solution containing manganese and nickel salts, and then the composite hydroxides are mixed with lithium compounds like lithium hydroxide, and burned at a temperature range not less than 600 °C, not more than 800 °C to make positive active materials.

In a manufacturing process according to the present invention, composite hydroxides comprising nickel and cobalt (hereinafter referred to as Ni- Co composite hydroxide) are provided through coprecipitation of cobalt and nickel hydroxides by adding caustic alkali aqueous solution to mixed aqueous solution containing cobalt and nickel salts. In the composite hydroxides, therefore, a part of Ni is completely replaced with Co, and the crystal structure is reaching a level of solid solution. The crystallization is completed to an extremely high level, or the single phase status is achieved as observed through X- ray diffraction pattern.

As the Ni- Co composite hydroxides with monophase state are used, the resulting composite oxides after the burning have also the crystal structure of single phase completely. According to the present invention the burning temperature is specified to be within a range 600 °C - 800 °C, and no disturbance arises in the crystal structure under said temperature.

When Mn is used instead of Co the crystallization is likewise completed to an extremely high level showing no disturbance in the crystal structure.

In the case of using Co, in order to obtain a stable crystal structure with mixed valence state of Ni and Co, more than 0.05 Ni (corresponds to the value x is 0.95) need to be replaced with Co. However, when the number of Ni replaced with Co is more than 0.5, the active materials reveal significant decrease in their capacities because of the decrease of mobilities for Li by distortions of the crystal, disintegrations of crystal structure and the inbalances in the mixed valence state. In the case of using Mn, in order to obtain a stable crystal structure with mixed valence state of Ni and Mn, more than 0.05 Ni also need to be replaced with Mn. However, when the number of Ni replaced with Mn is more than 0.30(corresponds to the value x is 0.70), the active materials reveal also significant decrease in their capacities because of the same reasons described above.

### BRIEF DESCRIPTION OF THE INVENTION

FIG.1 shows a cross sectional view of a coin type experimental cell cited in the Embodiments.

FIG.2 is a correlationship chart between the capacities and the number of cycles of positive active materials when the value x is varied, in Embodiment 1.

FIG.3 is a correlationship chart between the capacities and the number of cycles of positive active materials when the burning temperature is varied, in Embodiment 1.

FIG.4 is a correlationship chart between the capacities and the number of cycles of positive active materials when the value x is varied, in Embodiment 2.

FIG.5 is a correlationship chart between the capacities and the number of cycles of positive active materials when the burning temperature is varied, in Embodiment 2.

FIG.6 is a correlationship chart between the capacities and the number of cycles of LiNixCo(1-x)O2 positive active materials provided in accordance with a prior art process.

FIG.7 is a correlationship chart between the capacities and the number of cycles of LiNixMn(1-x)O2 positive active materials provided in accordance with a prior art process.

### DESCRIPTION OF THE INVENTION

In the following, embodiments in accordance with the present invention are described referring to figures:

### (Embodiment 1)

In the first place, a manufacturing process of Ni- Co composite hydroxide through coprecipitation according to the present invention is described.

A saturated nickel sulfate aqueous solution was prepared by putting reagent nickel sulfate into water. A saturated aqueous solution containing nickel sulfate and cobalt sulfate was prepared by adding a specified quantity(according to the targeted Co/Ni ratio) of cobalt sulfate to the solution and water for adjustment. Slowly pouring caustic alkali aqueous solution containing sodium hydroxide into the saturated aqueous solution made precipitation of Ni hydroxide and Co hydroxide concurrently (coprecipitation). The precipitation was finished by sufficient addition of the caustic alkali solution. And then the Ni- Co composite hydroxide was obtained by filtering the deposits and rinsing with water. The water rinsing was repeated while measuring the pH value to confirm that the remaining alkali was almost zero. Then the obtained composite hydroxide was dried with hot air(dryer used was set at 100 °C ).

A Ni- Co composite hydroxide prepared thus showed a X- ray diffraction pattern of very close to single phase, and an elementary analysis disclosed that it contained Co and Ni in almost targeted ratio.

Although in this embodiment nickel sulfate was used as the source of Ni, and cobalt sulfate as the source of Co in the coprecipitation process, others such as nickel nitrate and cobalt nitrate may also be used as the source of Ni and Co, respectively. And any salt that can make aqueous solution is usable. Although aqueous solution of sodium hydroxide was used as the caustic alkali solution in this embodiment, other caustic alkali solutions such as aqueous solutions of potassium hydroxide and lithium hydroxide may also serve the purpose.

Burning process with Li compound is described as follows. Lithium hydroxide was used as the Li compound. The Ni- Co composite hydroxide obtained through the coprecipitation method described above was mixed with lithium hydroxide so that the number of atoms of Li equal to the total number of atoms of Co and Ni, and the mixture was ballmilled to be sufficiently ground and mixed. Then the mixture in an alumina crucible was carried out the first burning (corresponds to preliminary method) in oxygen for 20 hours at 550 °C, and the second burning for 2 hours at 750 °C. After the burning, the product was gradually cooled to the room temperature and milled to powder to be used as positive active material.

After preparing the several active materials of various Co/Ni ratio, each sample was examined by X- ray diffraction method. As the result, when the value x in a formula LiNixCo(1-x)O2 representing the composition of active material was not less than 0.5, the composite material showed single phase in X- ray diffraction pattern. When the value x was less than 0.5, although the X- ray pattern was almost single phase, the peak strength tends to be weak which showed the crystallinity is not so complete.

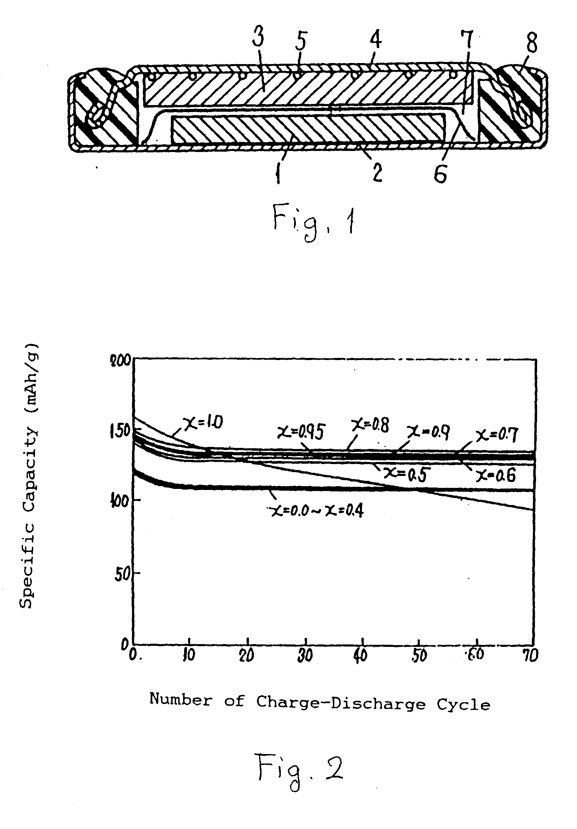

The positive electrode mix consisted of the positive active material with 5wt% AB(acetylene black) and 4wt% PVDF ( polyvinyliden fluoride). Then the mix was kneaded with a solvent NMP(N- methylpyrrolidinone) to form a paste. Next, the paste was coated on the one side of aluminum foil, dried and pressed to make an electrode plate. FIG. 1 illustrates vertical cross sectional view of a coin type experimental cell used in the embodiments of the present invention. In FIG.1, a positive electrode 1 was a disk stamped out of said electrode plate, and was placed inside of a cell case 2. A negative electrode 3 was a metal lithium pressed on a stainless steel net 5 which was spot welded inside of a cover 4. A polypropylene separator 6 was put between the positive electrode 1 and the negative electrode 3, and they were soaked with an electrolyte 7. These were tightly sealed using a polypropylene gasket 8. The electrolyte was a solution containing 1 mol LiPF6 (lithium hexafluoro phosphate) in a mixed solvent of ethylene carbonate(EC) and diethyl carbonate(DEC).

The positive active materials of which x value was 0, 0.1, 0.2, 0.3, 0.4, 0.5, 0.6, 0.7, 0.8, 0.9, 0.95, 1.0 respectively in a formula LiNixCo(1-x)O2 were prepared and incorporated into said coin type cells. The x = 1.0 means the LiNiO2 including no Co. These cells have been charged and discharged for cycle life test. The charge- discharge conditions: charge- discharge was carried out at a constant current of 0.5mA/cm² for the positive electrode at 20 °C, and the charge end voltage is 4.3V, the discharge end voltage is 3.0V.

FIG.2 shows the results of said cycle test. As shown in FIG.2, the positive active materials whose x value is within a range x = 0.1 ∼ 0.4 show a small initial capacities, about 120mAh/g.

The positive active materials within a range x = 0.5 ∼ 0.95 show a large initial capacity, about 140 ∼ 150mAh/g, and a good cyclability of where 90% of the initial capacity could be kept at the 50th cycle and does not show any decrease in the following cycles. The positive active material of x = 1.0 ( no Co content) shows a significant cycle deterioration, down to 65% at the 50th cycle from the initial capacity and deteriorates further in the following cycles, although the initial capacity was higher than 150mAh/g.

Consequently, the value x in the active material LiNixCo (1-x)O2 is within a range 0.5 ∼ 0.95.

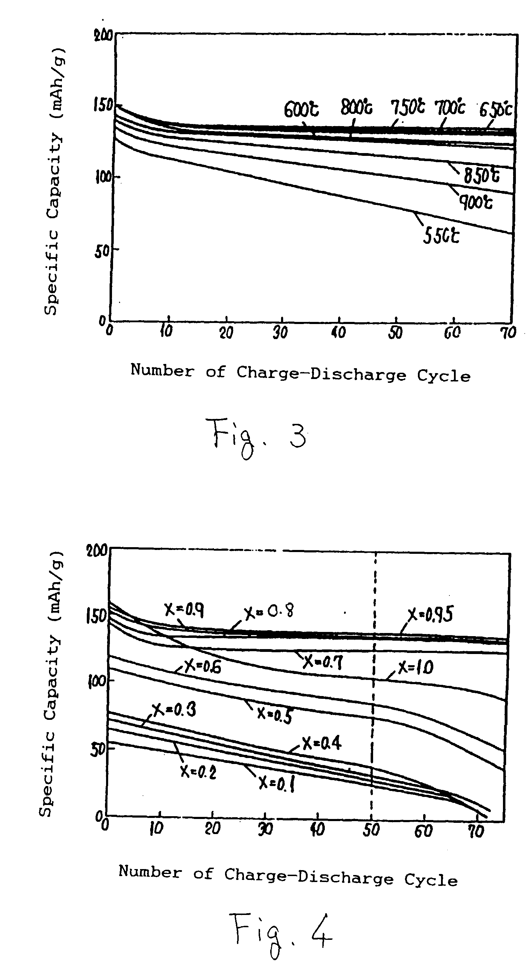

Next, the positive active materials represented by a formula LiNix Co(1- x) 02 whose value x is within a range 0.5 ∼ 0.95 were prepared at the various burning temperature. But the first preliminary burning process of 550 °C for 20hours was carried out in the same way as the foregoing. In the following stage( the significant second burning process), the burning temperatures of 550 °C, 600 °C, 650 °C, 700 °C, 750 °C, 800 °C, 850 °C and 900 °C were examined respectively. These positive active materials which were prepared at the various temperatures respectively, were incorporated into the coin type cells. And they were tested in the charge- discharge cycle test of the same test conditions. The results when the value x was 0.8 are shown in FIG.3 as a typical example.

As shown in FIG.3, the active materials prepared at the burning temperature 600 °C ∼ 800 °C show good results in the initial capacities and in the cycle characteristics. That of burned at 550 °C shows insufficient initial capacity and unsatisfactory cycle characteristic. Those of burned at 850 °C and 900 °C show a smaller initial capacities and a remarkable deterioration during the cycling.

From the results, the recommendable burning temperature range is 600 °C ∼ 800 °C. However, judging from the cycle deterioration slightly increasing just at 600 °C and 800 °C, and the initial capacity slightly decreasing just at 800 °C, a range 650 °C - 750 °C is preferred.

The same experiments about the burning temperatures were carried out not only for the materials whose value x is 0.8,but also whose value x is 0.50 ∼ 0.95. According to the results,these show the same trends as the one whose value x = 0.8.

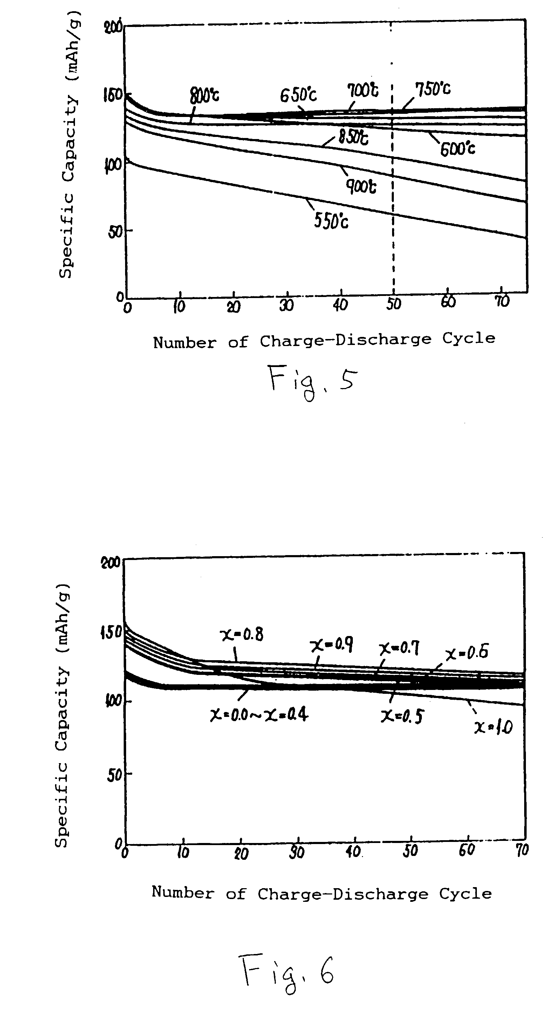

A positive active material having a composition LiNixCo(1-x)O2 has been composed in accordance with a prior art of mixing and burning method. Nickel hydroxide, lithium hydroxide and cobalt hydroxide have been mixed in the condition of the Ni:Co:Li atom ratio to be 0.8: 0.2:1.0. And then, the mixture has been ballmilled and mixed, and put into an alumina crucible to be first burned in oxygen at 550 °C for 20hours, and second burned at 750 °C for 2hours. After the burning the product was slowly cooled down to room temperature, and milled to powder. In spite of this active material has single phase according to X- ray diffraction pattern, the capacity deterioration is remarkable during the charge- discharge cycle test. So, the positive active materials of which value x is 0, 0.1, 0.2, 0.3, 0.4, 0.5, 0.6, 0.7, 0.8, 0.9 respectively in a formula LiNixCo(1-x)O2 have been prepared and incorporated into the coin type cell. And they have been carried out the charge - discharge cycle test. The results are shown in FIG.6.

As shown in FIG.6, the positive active materials prepared through a prior art process show poor cycle performance, despite the value x of which being within a range 0.5 - 0.9. As compared with the material prepared by prior art, those in accordance with the present invention show excellent cycle performance.

### (Embodiment 2)

A process of making Ni-Mn composite hydroxide through coprecipitation according to the present invention was the same way as that of Ni- Co composite hydroxide in Embodiment 1. As the source of Mn, any salt that can make aqueous solution, such as manganese sulfate, manganese nitrate is usable. A Ni-Mn composite hydroxide obtained thus had a X-ray diffraction pattern very close to single phase, and an elementary analysis disclosed that it contained Mn and Ni in almost targeted ratio.

The burning process for said Ni-Mn composite hydroxides and the Li compounds also remains the same as in Embodiment 1.

After preparing the several active materials of various Mn/Ni ratio, each sample was examined by X-ray diffraction method. As the results, when the value x in a formula LiNixMn(1-x)O2 representing the composition of active material is more than 0.7, the composite materials show single phase in X-ray diffraction pattern. When the value x is less than 0.7, in spite of the X- ray pattern is almost single phase, the peak strength tends to go weak which shows crystalline is not so growing. Besides, when the value x became lower than 0.5, the layer structure of hexagonal crystalline have been broken.

The positive active materials of which value x was 0.1, 0.2, 0.3, 0.4, 0.5, 0.6, 0.7,.0.8, 0.9, 0.95, 1.0 respectively in a formula LiNixMn(1-x)O2 were prepared and incorporated into the coin type cells. The x=1.0 means the LiNiO2 including no Mn. These cells have been charged and discharged for cycle life test. The charge- discharge conditions also remained the same as in Embodiment 1.

FIG.4 shows results of the cycle test. The positive active materials whose x value is within a range x = 0.1 ∼ 0.4 show a small initial capacity of about 50 ∼ 80mAh/g, and a remakable cycle deterioration, down to 50% after the 50th cycle from the initial capacity and deteriorate further in the following cycles.

The positive active materials of x = 0.5 ∼ 0.6 show also small initial capacities of about 110 ∼ 120mAh/g, and the cycle deterioration is also remarkable, down to 70% after the 50th cycle from the initial capacities , and deteriorate further in the following cycles.

The positive active materials whose x value is within a range x = 0.7 - 0.95 show large initial capacities of about 140 ∼ 150mAh/g, and excellent cycle performance which keep 90% of the initial capacities after the 50th cycle and not observed any decrease in the following cycles.

Consequently, the value of x in an active material LiNixMn(1-x)O2 is within a range 0.7 ∼ 0.95.

Next, the positive active materials represented by a formula LiNixMn(1-x) O2 whose value x is within a range 0.70 - 0.95 were prepared at the various burning temperature.

But the first preliminary burning process of 550 °C for 20hours was carried out in the same way as the foregoing. In the following stage( the significant second burning process), the burning temperatures of 550 °C, 600 °C, 650 °C, 700 °C, 750 °C, 800 °C, 850 °C and 900 °C were examined respectively. These positive active materials which prepared at the various temperatures respectively, were incorporated into the coin type cells. And they were tested in the charge-discharge cycle test of the same test conditions in Embodiment 1.

The results when the value x was 0.8 are shown in FIG.5 as a typical example. As shown in FIG.5, the active materials prepared at the burning temperature 600 °C ∼ 800 °C show good results in the initial capacities and in the cycle characteristics. That of burned at 550 °C shows insufficient initial capacity and unsatisfactory cycle characteristics. Those of burned at 850 °C and 900 °C show a smaller initial capacities and a remakable deterioration during the cycling.

From the results, the recommendable burning temperature range is 600 °C∼ 800 °C. However, judging from the cycle deterioration goes slightly large just at 600 °C and 800 °C, and the initial capacity slightly small just at 800 °C, therefore, a range 650 °C - 750 °C is further preferred.

The same experiments about the burning temperatures were carried out not only for the materials whose value x is 0.8,but also whose value x is 0.70 ∼ 0.95. According to the results, these show the same trends as the one whose value x = 0.8.

A positive active material having a composition LiNix Mn(1-x) O 2 has been composed in accordance with a prior art of mixing and burning method. Nickel hydroxide, lithium hydroxide and manganese hydroxide have been mixed in the condition of the Ni:Mn:Li atom ratio to be 0.8: 0.2:1.0. And then the mixture has been ballmilled and mixed, and put into an alumina crucible to be first burning in oxygen at 550 °C for 20hours, and second burning at 750 °C for 2hours. After the burning, the product was slowly cooled down to room temperature, and milled to powder. According to X- ray diffraction pattern, the active material does not show a single phase. The single phase was obtained only at a burning temperature higher than 800 °C.

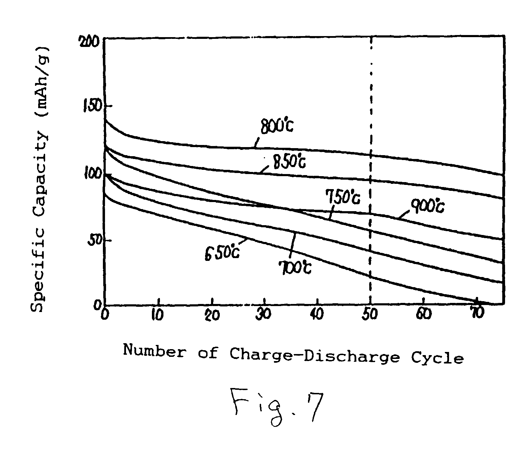

FIG.7 shows results of the charge-discharge cycle test for the various active materials burned at the above mentioned various temperatures. The positive active materials burned at a temperature range of 650 °C∼ 750 °C which do not have single phase crystal structure not only show small initial capacities , but also show poor cycle performance (the capacities have gone down below 50% after the 50th cycle from the initial capacities).

On the other hand, the positive active materials burned at a temperature higher than 800 °C show single phase crystal structure. These materials maintain an 80% of the initial capacity after the 50th cycle, however the capacities goes down below 100mAh/g, and decreases further.

In manufacturing processes of active positive materials for lithium secondary batteries according to the present invention, the nickel- cobalt composite hydroxides are provided through coprecipitation of nickel and cobalt hydroxides by adding caustic alkali aqueous solutions to mixed aqueous solutions of nickel and cobalt salts, or the nickel- manganese composite hydroxides are provided through coprecipitation of nickel and manganese hydroxides by adding caustic alkali aqueous solutions to mixed aqueous solutions of nickel and manganese salts. As it is possible to replace completely a part of Ni with Co or Mn by coprecipitation, the composite hydroxides have a single phase structure according to X-ray diffraction pattern. The positive active materials prepared by burning said Ni-Co composite hydroxides with lithium compounds or said Ni-Mn composite hydroxides with lithium compounds have also a single phase crystal structure. As the single phase structure has the advantage that Li mobility in crystal is high, the positive active materials provided through the coprecipitation by the present invention show a large capacity and an excellent cycle characteristic.

## Claims

1. A manufacturing process of positive active materials for lithium secondary batteries comprising lithium containing oxides, nickel and cobalt, represented by a formula LiNixCo(1-x)O2, where the value x is 0,50 ≤ x ≤ 0,95; wherein composite hydroxides comprising cobalt and nickel are provided through coprecipitation of cobalt and nickel hydroxides by adding caustic alkali aqueous solutions to mixed aqueous solutions containing cobalt and nickel salts, which composite hydroxides are then mixed with lithium compounds and burned at a temperature not less than 600°C and not more than 800°C.

2. A manufacturing process of positive active materials for lithium secondary batteries in accordance with claim 1, wherein the cobalt salt is cobalt sulfate.

3. A manufacturing process of positive active materials for lithium secondary batteries in accordance with claim 1, wherein the nickel salt is nickel sulfate.

4. A manufacturing process of positive active materials for lithium secondary batteries comprising lithium containing oxides, nickel and manganese, represented by a formula LiNixMn(1-x)O2, where the value x is 0,95 ≥ x ≥ 0,70; wherein composite hydroxides comprising manganese and nickel are provided through coprecipitation of manganese and nickel hydroxides by adding caustic alkali aqueous solutions to mixed aqueous solutions containing manganese and nickel salts, which composite hydroxides are then mixed with lithium compounds and burned at a temperature not less than 600°C and not more than 800°C.

5. A manufacturing process of positive active materials for lithium secondary batteries in accordance with claim 4, wherein the manganese salt is manganese sulfate.

6. A manufacturing process of positive active materials for lithium secondary batteries in accordance with claim 4, wherein the nickel salt is nickel sulfate.

7. A manufacturing process of lithium secondary batteries; wherein composite hydroxides comprising cobalt and nickel are provided through coprecipitation of cobalt and nickel hydroxides by adding caustic alkali aqueous solutions to mixed aqueous solutions containing cobalt and nickel salts, which composite hydroxides are then mixed with lithium compounds and burned at a temperature not less than 600°C and not more than 800°C to make positive active materials represented by a formula LiNixCo(1-x)O2, where the value x is 0,50 ≤ x ≤ 0,95; and paste containing the said positive active materials are coated on aluminium foils constituting the positive electrodes of the batteries.

8. A manufacturing process of lithium secondary batteries; wherein composite hydroxides comprising manganese and nickel are provided through coprecipitation of manganese and nickel hydroxides by adding caustic alkali aqueous solutions to mixed aqueous solutions containing manganese and nickel salts, which composite hydroxides are then mixed with lithium compounds and burned at a temperature not less than 600°C and not more than 800°C to make positive active materials represented by a formula LiNixMn(1-x)O2, where the value x is 0,95 ≥ x ≥ 0,70; and paste containing the said positive active materials are coated on aluminium foils constituting the positive electrodes of the batteries.

## Patentansprüche

1. Verfahren zur Herstellung von Aktivmaterialien für positive Elektroden für Lithium-Sekundärbatterien, die lithiumhaltige Oxide, Nickel und Kobalt einschliessen und durch eine Formel LiNiₓCo₁₋ₓO₂ beschrieben werden, in der der Wert von x durch 0,50 ≤ x ≤ 0,95 gegeben ist; bei dem zusammengesetzte, Kobalt und Nickel enthaltende Hydroxide durch gemeinsame Fällung von Kobalt- und Nickelhydroxiden mittels Zugabe wässriger Alkalihydroxidlösungen zu gemischten wässrigen Lösungen von Kobalt- und Nickelsalzen erzeugt und sodann mit Lithiumverbindungen vermischt sowie bei einer Temperatur von nicht weniger als 600 °C und nicht mehr als 800 °C gebrannt werden.

2. Verfahren zur Herstellung von Aktivmaterialien für positive Elektroden für Lithium-Sekundärbatterien gemäss Anspruch 1, worin das Kobaltsalz Kobaltsulfat ist.

3. Verfahren zur Herstellung von Aktivmaterialien für positive Elektroden für Lithium-Sekundärbatterien gemäss Anspruch 1, worin das Nickelsalz Nickelsulfat ist.

4. Verfahren zur Herstellung von Aktivmaterialien für positive Elektroden in Lithium-Sekundärbatterien, die lithiumhaltige Oxide, Nickel und Mangan einschliessen und durch eine Formel LiNiₓMn₁₋ₓO₂ beschrieben werden, in der der Wert von x durch 0,95 ≥ x ≥ 0,70 gegeben ist; bei dem zusammengesetzte, Mangan und Nickel enthaltende Hydroxide durch gemeinsame Fällung von Mangan- und Nickelhydroxiden mittels Zugabe wässriger Alkalihydroxidlösungen zu gemischten wässrigen Lösungen von Mangan- und Nickelsalzen erzeugt und sodann mit Lithiumverbindungen vermischt sowie bei einer Temperatur von nicht weniger als 600 °C und nicht mehr als 800 °C gebrannt werden.

5. Verfahren zur Herstellung von Aktivmaterialien für positive Elektroden für Lithium-Sekundärbatterien gemäss Anspruch 4, worin das Mangansalz Mangansulfat ist.

6. Verfahren zur Herstellung von Aktivmaterialien für positive Elektroden für Lithium-Sekundärbatterien gemäss Anspruch 4, worin das Nickelsalz Nickelsulfat ist.

7. Verfahren zur Herstellung von Lithium-Sekundärbatterien, bei dem zusammengesetzte, Kobalt und Nickel enthaltende Hydroxide durch gemeinsame Fällung von Kobalt- und Nickelhydroxiden mittels Zugabe wässriger Alkalihydroxidlösungen zu gemischten wässrigen Lösungen von Kobalt- und Nickelsalzen erzeugt und sodann mit Lithiumverbindungen vermischt sowie bei einer Temperatur von nicht weniger als 600 °C und nicht mehr als 800 °C gebrannt werden, um Aktivmaterialien für positive Elektroden zu erzeugen, die durch eine Formel LiNiₓCo₁₋ₓO₂ beschrieben werden, in der der Wert von x durch 0,50 ≤ x ≤ 0,95 gegeben ist; und Pasten, die die benannten Aktivmaterialien enthalten, auf Aluminiumfolien gestrichen werden, um die positiven Elektroden der Batterien zu bilden.

8. Verfahren zur Herstellung von Lithium-Sekundärbatterien, bei dem zusammengesetzte, Mangan und Nickel enthaltende Hydroxide durch gemeinsame Fällung von Mangan- und Nickelhydroxiden mittels Zugabe wässriger Alkalihydroxidlösungen zu gemischten wässrigen Lösungen von Mangan- und Nickelsalzen erzeugt und sodann mit Lithiumverbindungen vermischt sowie bei einer Temperatur von nicht weniger als 600 °C und nicht mehr als 800 °C gebrannt werden, um Aktivmaterialien für positive Elektroden zu erzeugen, die durch eine Formel LiNiₓMn₁₋ₓO₂ beschrieben werden, in der der Wert von x durch 0,95 ≥ x ≥ 0,70 gegeben ist; und Pasten, die die benannten Aktivmaterialien enthalten, auf Aluminiumfolien gestrichen werden, um die positiven Elektroden der Batterien zu bilden.

## Revendications

1. Procédé de fabrication de matières positives actives pour des batteries secondaires au lithium, comprenant des oxydes de nickel et de cobalt contenant du lithium, ayant la formule LiNixCo(1-x)O2 où la valeur de x est telle que 0,50 ≤ x ≤ 0,95, dans lequel des hydroxydes composites contenant du cobalt et du nickel sont obtenus par co-précipitation des hydroxydes de cobalt et de nickel, effectuée en ajoutant une solution aqueuse d'un alcali à une solution aqueuse mixte contenant des sels de cobalt et de nickel, les hydroxydes composites étant ensuite mélangés avec des composés de lithium et calcinés à une température qui n'est pas inférieure à 600 °C et qui n'est pas supérieure à 800 °C.

2. Procédé de fabrication de matières positives actives pour des batteries secondaires au lithium selon la revendication 1, dans lequel le sel de cobalt est le sulfate de cobalt.

3. Procédé de fabrication de matières positives actives pour des batteries secondaires au lithium selon la revendication 1, dans lequel le sel de nickel est le sulfate de nickel.

4. Procédé de fabrication de matières positives actives pour des batteries secondaires au lithium comprenant des oxydes de nickel et de manganèse contenant du lithium, ayant la formule LiNixMn(1-x)O2, où la valeur de x est telle que 0,95 ≥ x ≥ 0,70, dans lequel les hydroxydes composites contenant du manganèse et du nickel sont obtenus par co-précipitation des hydroxydes de manganèse et de nickel, en ajoutant une solution aqueuse d'un alcali à une solution aqueuse mixte contenant des sels de manganèse et de nickel, les hydroxydes composites étant ensuite mélangés avec des composés de lithium et calcinés à une températures qui n'est pas inférieure à 600 °C et qui n'est pas supérieure à 800 °C.

5. Procédé de fabrication de matières positives actives pour des batteries secondaires au lithium selon la revendication 4, dans lequel le sel de manganèse est le sulfate de manganèse.

6. Procédé de fabrication de matières positives actives pour des batteries secondaires au lithium selon la revendication 4, dans lequel le sel de nickel est le sulfate de nickel.

7. Procédé de fabrication de batteries secondaires au lithium, dans lequel des hydroxydes composites contenant du cobalt et du nickel sont obtenus par co-précipitation d'hydroxydes de cobalt et de nickel, par addition d'une solution aqueuse d'alcali à une solution aqueuse mixte contenant des sels de cobalt et de nickel, lesquels hydroxydes composites sont ensuite mélangés à des composés de lithium et calcinés à une température qui n'est pas inférieure à 600 °C et qui n'est pas supérieure à 800 °C, pour former les matières positives actives ayant la formule LiNixCo(1-x)O2, dans laquelle la valeur de x est telle que 0,50 ≤ x ≤ 0,95, une pâte contenant lesdites matières positives actives étant ensuite appliquée sur des feuilles d'aluminium constituant les électrodes positives des batteries.

8. Procédé de fabrication de batteries secondaires au lithium dans lequel des hydroxydes composites contenant du manganèse et du nickel sont obtenus par co-précipitation d'hydroxydes de manganèse et de nickel, par addition d'une solution aqueuse d'alcali à une solution aqueuse mixte contenant des sels de manganèse et de nickel, lesquels hydroxydes composites sont ensuite mélangés à des composés de lithium et calcinés à une température qui n'est pas inférieure à 600 °C et qui n'est pas supérieure à 800 °C, pour former les matières positives actives représentées par la formule LiNixMn(1-x)O2, dans laquelle la valeur de x est telle que 0,95 ≥ x ≥ 0,70, une pâte contenant lesdites matières positives actives étant ensuite appliquée sur des feuilles d'aluminium constituant les électrodes positives de batteries.
